# EUROPEAN PATENT SPECIFICATION

(11) **EP 1 873 642 B1**
(45) Date of publication and mention of the grant of the patent: **19.08.2009**
(21) Application number: 06013464.0
(22) Date of filing: 29.06.2006
(51) Int. Cl.: G06F 11/14

(54) **Transaction method for managing the storing of persistent data in a transaction stack**
Transaktionsverfahren zur Speicherverwaltung von persistenten Daten in einem Transaktionstapel
Procédé de transaction pour gestion des données persistentes dans une pile de transaction

(43) Date of publication of application: 02.01.2008
(73) Proprietor: Incard SA, 1204 Geneva (CH)
(72) Inventor: Sepe, Paolo, 80010 Quarto (Napoli) (IT); Di Cosmo, Luca, 81017 S. Angelo D'Alife (Caserta) (IT); Musella, Enrico, 80078 Pozzuoli (Napoli) (IT)
(74) Representative: Ferrari, Barbara

(56) References cited:
- EP-A- 0 838 756
- US-A1- 2006 015 754
- US-B1- 6 219 666

## Description

### Field of Application

The present invention relates to a transaction method for managing the storing of persistent data, to be stored in at least one memory region of a non volatile memory device, inside a transaction stack comprising a plurality of transaction entries, before the execution of at least one update operation that involves at least a portion of the persistent data, the transaction method providing a plurality of functions for:
- activating a transaction by means of a begin transaction marker before the execution of at least one update operation;
- executing a push instruction, that reads the persistent data from the non volatile memory and stores it in the plurality of transaction entries;
- executing a pop instruction, that reads the persistent data from the plurality of transaction entries and restores them in the memory regions if an unexpected event occurs during a transaction execution and/or if a transaction programmed abort is invoked;
- executing a commit transaction instruction to indicate that the plurality of transaction entries are releasable after the execution of the at least one update operation.

More particularly, the present invention relates to a method of the type cited above wherein the value of persistent data are stored inside the transaction stack before the beginning of the update operations so that the memory regions involved in such update, if an unexpected event occurs, are restored in a consistent state, corresponding to the value they had before the beginning of the update operations.

### Background of the Invention

As it is well known a non volatile memory, such as a Flash memory or an EEPROM memory, is used in an electronic device to store non volatile data. Such non volatile data are also indicated as persistent data because their content may be variable during the programming phases of the electronic memory device but their values must be preserved during the power off.

More particularly, the non volatile memory assures that the value of persistent data is not lost after a regular switch-off of the electronic device, i.e. when the electrical deactivation occurs in an idle state of the device. This is the typical case wherein the deactivation is driven by an operative system of a terminal which the device is connected to or directly belonging to the electronic device.

On the other hand, if an accidental electrical deactivation occurs during an application execution, specifically during an updating operation of persistent data, it is possible that the value of persistent data is left in an inconsistent state, that could compromise, completely or partially, the functioning of the electronic device in the successive power-on sessions.

A prior art document, the patent EP 0 964 360, relates to a method for supplying power to an integrated circuit cards, comprising a microprocessor, a volatile memory (RAM) and a non volatile memory (ROM, EEPROM), in case of unexpected power off.

This solution try to overcome the above problem always keeping the power supply to the memory device.

A second prior art document US 2005/0055498 relates to an integrated circuit cards comprising failure protection means for maintaining power in case of a power supply failure and a power failure detector for sensing a corresponding power supply failure.

From a third prior art document, EP0838756, it is known an arrangement for preserving persistent data of a transactional interpreter process during unexpected interruption of an update operation by pushing said data onto a stack, whereafter said data is restored from said stack using pop instructions to allow the process to return to its pre-interrupt state.

From a fourth prior art document, US6219666, a transactional database system is known for performing update transaction, whereby rollback to a previous interrupted state is achieved by pushing transaction context onto a transaction stack and restoring said data by popping from said stack.

From a fifth prior art document, US2006015754, it is taught an arrangement for secure update of persistent data in a non-volatile memory in case of an unexpected power-loss by maintaining multiple copies.

In any case, those prior art documents disclose methods based on giving additional power to the electronic device for concluding sensible operations before the unexpected switch off of the device but they don't consider a transaction method, that is more indicated for storing persistent data also in case of other unexpected events, for example not determined by a power off.

A transaction method may restore the value of persistent data in a consistent state, generally grouping together an arbitrary number of writing operations and establishing that they have to be considered as a single atomic writing operation respect to unexpected events, comprising a power off. The arbitrary number of writing operations may be considered a "Secure Update" because the value of the persistent data they process are guaranteed to be restored in a consistent state even if unexpected events occur.

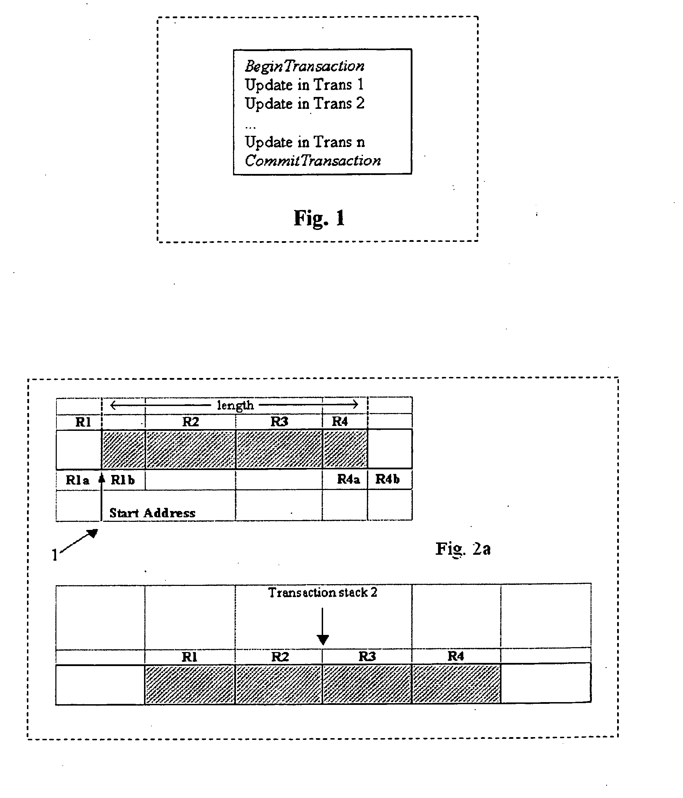

More particularly, the transaction method marks all the writing operations involved in a "Secure Update" between a first and a second pseudo-instruction, respectively BeginTransaction and CommitTransaction, as schematically shown in Figure 1.

In case of unexpected events during the execution of an operation included between said Begin Transaction and Commit Transaction, the value of the persistent data are restored in the non volatile memory, at next device start-up, to the value they had before the Begin Transaction instruction.

More particularly, the transaction method is based on a transaction stack, that is a portion of non volatile memory, wherein the original value of persistent data involved in an update operation are stored before the starting of such update. If an unexpected event occurs, the initial-consistent value of persistent data are retrieved from the transaction stack and restored in the non volatile memory.

At the state of the art, the non volatile memory allows a limited number of writing accesses. Over this limit, the "data retention time" of the non volatile memory decreases to values not acceptable for any applicative purpose. For example, the number of the allowed writing operations for EEPROM or Flash memories is typically in the range of 100.000 to 1.000.000.

This limitation has impact on the implementation of the transaction method for driving the transaction stack, as any "Secure Update" involving a number of secure writing operation has the side effect of a further writing in the transaction stack.

Moreover, depending on how the transaction method drives the storing of persistent data inside the transaction stack, different write operations may stress some bytes of the transaction stack more than others. In other words, different portion or bytes of the transaction stack could be used not uniformly.

So, the maximum number of writing operations on such particularly stressed bytes bounds the number of the "Secure updating" operations allowed to the applications on the non volatile memory. Even if the device is guaranteed for 100.000 writing operations on each single byte of the non volatile memory, the electronic device cannot perform more than 100.000 "Secure updating", even on different memory bytes, because in opposite case, the bytes already stressed of the transaction stack could be damaged.

Moreover, the state of the art non volatile memory, such as Flash memory devices and several EEPROM memory, are based on a plurality of memory regions, each comprising a number of bits defining its granularity.

More particularly, it is impossible to erase single bits within a memory region, the erasing of single or several bits within a memory region requiring the erase of the whole region they belongs to for granularity issue of the memory region. The same problem affects the updating operation because in such memories a writing operation requires first an erase operation, to set the memory region in a "ready to be written" state.

So, when an unexpected event such as an accidental electrical power off occurs, because of the granularity issue, not only the bits involved in the actual write operation, but all the bytes that belongs to the memory regions involved in the update operation are affected by this problem.

More particularly, this problem must be faced not only during a "Secure Update" but also during a non secure update, hereinafter indicated as "Non atomic update", in other words when it is not required that all the operations involved in such update are considered as a single atomic operation.

With reference to figure 2a, a non volatile memory 1 is schematically shown, comprising a plurality of memory portions R1, R2, R3, R4. During a "Secure Update" instruction, memory portions R1, R2, R3 and R4 are involved in a writing operation. Such writing operation affects, for example, persistent data stored in memory sub-regions R1b of the portion R1, memory regions R2 and R3, and memory sub-regions R4a of the portion R4.

The location containing persistent data to be updated is pointed at by a "Start address" pointer and has a size equal to "Length". The transaction method must preserve the entire memory portions R1, R2, R3, R4 storing all its content in a transaction stack, even if the writing operation does not affect the whole regions R1 and R4 but only the sub-regions R1b, R4a. Memory portions R1 and R4 must be preserved completely because the writing operation requires an erase operation on them, due to granularity issue.

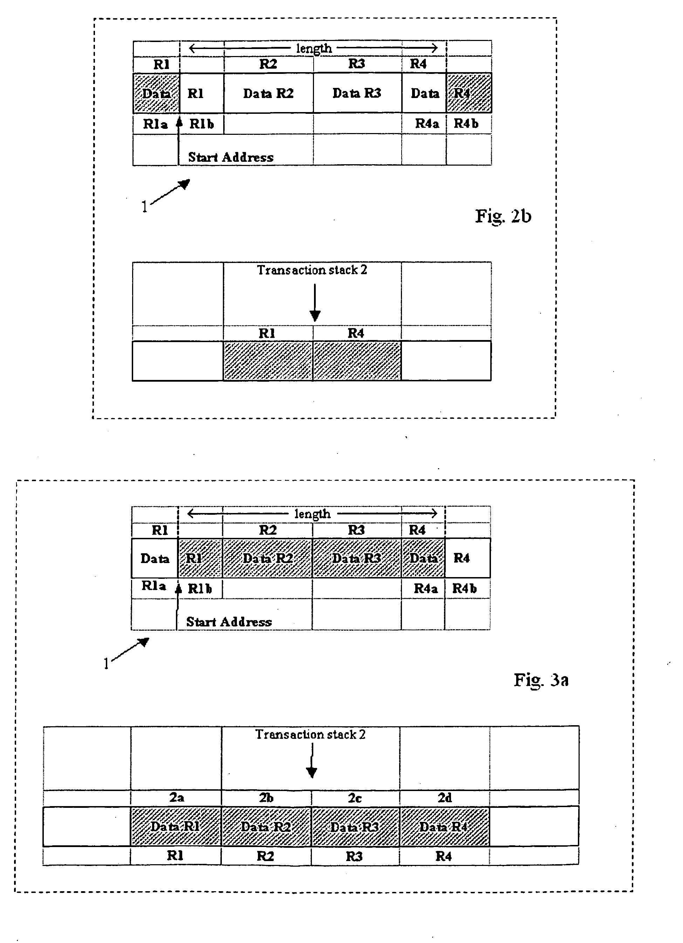

Figure 2b, schematically shows the same non volatile memory 1 wherein a "Non atomic Update" is performed. Also in this case memory portions R1, R2, R3, and R4 are involved in a non atomic writing operation that affects persistent data stored in a location represented by memory sub-region R1b, memory regions R2 and R3, and memory sub-region R4a.

Also in this case the transaction method preserves memory portions R1 and R4 because sub-regions R1a and R4b, not directly involved in the writing operation, must be preserved. Vice versa, regions R2 and R3 are not preserved. In fact, while the value involved in the "Non atomic update" and stored in the non volatile memory could be deliberately left in a partially modified state because not belonging to a "Secure Update", it is not acceptable that the same happens for adjacent bits that don't have to be updated but are involved in the memory portions erasing only because of granularity issue.

So, both "Secure Update" and "Non-atomic update" operations would require a transaction method for preserving persistent data against possible unexpected events occurred during update operations, determining an intensive use of the transaction stack.

The problem at the basis of the present invention is that the life time of the non volatile memory is limited due to writing operation on a transaction stack performed both during "Secure Update" and also during "Non atomic update" that stress such transaction stack especially because it must preserve a plurality of memory portions for their potential restoring in non volatile memory, not only during atomic updates but also during non atomic updates that involve, for granularity issue, the erasing of persistent data that cannot be left in non consistent state. At the moment the prior art does not provide any specific solution to solve this problem.

### Summary of the invention

The solution idea on which the invention is based is that of providing a transaction method for preserving as long as possible the life time of a transaction stack and driving the storing of persistent data in such stack so that only persistent data required to be restored after a possible power loss are preserved inside the transaction stack, even if a "Non atomic update" is invoked.

This problem is solved, according to the present invention, by a transaction method as previously indicated and defined by the characterising portion of the enclosed claim 1.

The features and advantages of the invention will be apparent from the following description of an embodiment thereof, given by way of non-limitative example with reference to the accompanying drawings.

### Brief Description of the drawing

Figure 1: schematically shows a couple of [BeginTransaction and CommitTransaction] instructions grouping a set of update operations, according to the prior art.
Figure 2a: schematically shows a couple of adjacent memory portions of a non volatile memory device which are involved in a "Secure Update" procedure, according to the prior art.
Figure 2b: schematically shows a couple of adjacent memory portions which are involved in a "Non atomic update" procedure, according to prior the art.
Figure 3a: schematically shows the couple of adjacent memory portions of figure 2a, involved in a "Secure Update" procedure according to the present invention.
Figure 3b: schematically shows a couple of adjacent memory portions of figure 2b, involved in a "Non atomic update" procedure according to the present invention.
Figure 3c: schematically shows in more detail the memory portions of figures 3a and 3b.
Figures from 4a to 4s schematically shows the content of Index, Address and Length buffers during the execution of [BeginTransaction and CommitTransaction] instructions, according to the present invention.
Figure 5: schematically shows the content of non volatile memory (Eep) and the content of Index, Address, Length and Backup Data buffers during a power loss, according to the present invention.

### Detailed description

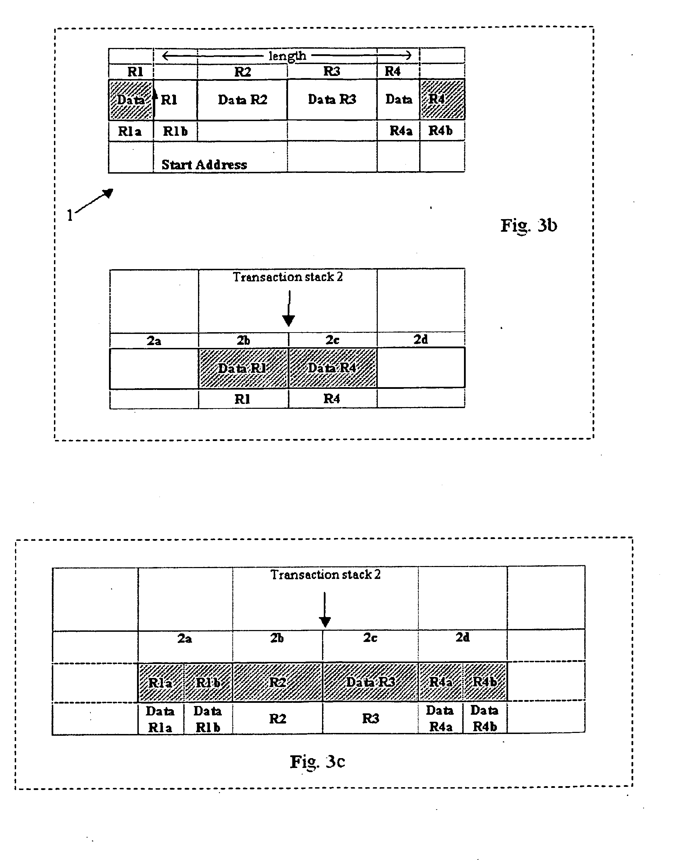

With more specific reference to figure 3a it is shown and is globally indicated with 1 a non volatile memory device comprising a plurality of memory portions R1-R4 that are provided for storing persistent data data-R1..data-R4, respectively. In the same figure it also represented a transaction stack 2, comprising a plurality of transaction entries 2a-2d for storing the persistent data data-R1..data-R4 during an update phase.

More particularly, as shown in more detail in figure 3a, the memory portion R1 of non volatile memory 1 comprises two sub-regions R1a and R1b, respectively including a first and a second group of persistent data data-R1a and data-R1b. Also the memory portion R4 comprises two corresponding sub-regions R4a and R4b including a first and a second group of persistent data data-R4a, data-R4b.

An update operation may affect only a group of said persistent data, for example identified by memory sub-region data-R1b, memory regions data-R2, data-R3, memory sub-region data-R4a.

During the execution of such update operation, a transaction method drives the storing of persistent data data-R1, data-R2, data-R3, data-R4 contained in memory portions of R1, R2, R3, R4 inside the transaction stack 2.

More particularly, the transaction method comprises:
- a push instruction, for reading the persistent data data-R1, data-R2, data-R3, data-R4 from the non volatile memory 1 and storing them in one or more transaction entries of the transaction stack 2, for example in transaction entries 2a, 2b, 2c, and 2d;
- a pop instruction, for reading the persistent data data-R1, data-R2, data-R3, data-R4 from the transaction entries 2a, 2b, 2c and 2d and restoring them in the corresponding memory portions R1, R2, R3, R4 of the non volatile memory 1;
- a begin transaction marker to indicate that one or more update operations are starting;
- a commit transaction marker to mark that one or more of said update operations has finished; As schematically shown in figure 3b, the transaction method also comprises:

- a push extreme instruction for reading one or more group data-R1a, data-R4b of the persistent data data-R1, data-R4 from the non volatile memory 1 and storing them in one or more transaction entries of said transaction stack 2;
- discard instruction for discarding, from said transaction stack 2 only the transaction entries storing the previously stored one or more group of data data-R1a, data-R4b;

Advantageously, the push extreme instruction requires a writing operation in the transaction stack 2 only for those groups of data that must be preserved in case of unexpected events. For example, if a non atomic update is required on the group of data data-R1b, data-R2, data-R3, data-R4a, the group of data that must be preserved after a possible power loss are data-R1a, data-R4b, that are involved for granularity issue.

The push extreme instruction is invoked when a storing of a group of the persistent data data-R1b, data-R2, data-R3, data-R4a is not required in the transaction stack because their retrieving after a potential power loss it is not required due to the nature of the update instruction, that is a non atomic update.

In this way, the transaction stack 2 is less stressed by writing operations, being not necessary to store the group of the persistent data data-R1b, data-R2, data-R3, data-R4a.

More particularly, the transaction stack 2 comprises all the information needed to recover persistent data inside the non volatile memory in a consistent state: non only the value of the persistent data inside the non volatile memory 1, but also its address and size.

When a "Secure Update" requires the storing of original value inside the transaction stack, the transaction method initializes a begin transaction marker for establishing that, in case of unexpected events or programmed abort, only the entries stored after the begin transaction marker are used as original value of persistent data involved in the update operation.

Therefore, if a "Secure update", for example involving memory portions R1,R2, R3, R4 is requested, the transaction method calls a push instruction for storing inside the transaction stack 2 the information related to the memory portions R1, R2, R3, R4 being these memory regions involved in the update operation.

When a "Non atomic update" is requested, the transaction method firstly checks if the transaction stack 2 is currently marked by a begin transaction marker, for example opened by a previously called secure update and if no marker was present, a new begin transaction marker is activated. Then the transaction method calls a push extreme instruction to push inside the transaction stack 2 only the sub-regions that must be protected during the "non atomic update" due to the granularity issue. Finally the transaction method performs the actual update, discards the entries, and invalidates the begin transaction marker if it has been explicitly added for this "non atomic update".

As schematically shown in figure 3b, if a "Non atomic update", for example involving sub-region R1b, regions R2 and R3, sub-region R4a is requested, the transaction method only pushes the extreme group of data R1a, R4b in the transaction stack 2.

More particularly, the method according to the present invention offers the following set of functions:
- Begin Transaction: open a new level of transaction in the transaction stack 2.
- Push: preserve all the memory portions, for example R1, R2, R3, R4 involved in the update operation.
- Push Extremes: preserve only extreme sub-regions R1a, R4b adjacent to the data involved in the erase-update operation.
- Pop and Close Transaction: restore to the original value the memory updated by the last opened transaction and then close it.
- Discard: invalidate the last record in the last opened transaction.
- Discard and Close Transaction: invalidate the records relative to the last opened transaction and then close it.

Advantageously, the transaction stack 2 according to the present invention comprises four buffers: Backup Data, Address, Length, Index. The transaction stack guarantees a circular use of the four buffers so to maximize the life time of the corresponding non volatile memory stressing uniformly their memory cell.

Backup Data buffer comprises a plurality of aligned backup entry which length is multiple of the granularity of the non volatile memory 1, so that the updating of a single backup entry doesn't require the erasing of adjacent backup entries. More particularly, the Backup Data buffer contains the original value of the persistent memory to be restored in case of abort during an update operation. The portion of the entry that must be restored is identified by means of Address-Length entries as explained after.

Index buffer comprises a plurality of index entries and link Address-Length entries inside Address-Length buffers to Backup Data entries inside Backup Data buffer. More particularly, the Index buffer provides that the same Backup Data entry can be related to more update operations, guaranteeing the reuse of Backup data buffer. Advantageously, a Backup data entry is conserved as long as possible, because it may be reused inside a same transaction without additional re-writing that limits the life time of non volatile memory 1.

In order to extend the lifetime of non-volatile memory 1, it is important to guarantee the circularity in all the four buffers. Since Index, Address and Length buffers are substantially aligned, their circularity is guaranteed by means of markers in Index buffer. Those markers allow to track the last used entry in Index buffer and consequently the last used entry in Address and Length buffers.

Circularity of Backup buffer, instead, is guaranteed saving in Index buffer the last used position of Backup buffer. Moreover, before closing a Root Transaction the last position used is saved too. This means that when a Nested Transaction is closed, it releases Backup entries to the previous Transaction opened, that may be a Root Transaction or a Nested Transaction, since a multilevel transactions is possible.

Unlike the update of Backup entries, update of Index, Address, Length entries must take into account the memory granularity, since the length of a single entry cannot be a multiple of granularity for wasting of memory space reason.

Advantageously, the size of Index, Address, and Length buffers is always a multiple of memory granularity, so that Index, Address and Length buffers are composed by an integer number of granularity pages. Each page can be completely erased without touching the rest of the buffer.

More particularly, when an index value must be written in a index entry within an Index page, we can distinguish two cases:
- the index entry is available for the writing, for example because it has been already erased;
- the index entry is not available for the writing, for example because the index entry is not erased.

In the first case, no erase operation is needed but only a simple write operation shall be performed to store the new index value. In the second case, if possible, the whole Index page and the corresponding Address and Length pages shall be erased to make them available for writing.

Hereinafter, the functions offered by the transaction method, are listed and described in more detail:
- Begin Transaction: open a new level of transaction. To extend the lifetime of non-volatile memory 1, global-pointers in non volatile memory 1 cannot be used for defining the beginning of the level. So marker elements are introduced in Index buffer.
- Discard: Invalidate the last record in the last transaction opened. Before discarding an entry, the previous entry related to the same memory-block is searched. If exist a previous entry it is marked to remember that a "Non atomic update" has happened on the same non-volatile memory portion. Discard operation simply report to NOT ERASED state the index entry.
- Push: Add a new record in the transaction stack 2, in the last opened transaction. If the block requested is not available in Backup Data buffer it is stored. Otherwise it is stored again only if "Non atomic update" has happened on the non-volatile memory portion but are not stored in Backup Data buffer, for example because discard operation has been invoked.
   The writings are executed in this order: Backup Buffer (if required), Address, Length and Index, for validation marker purposes.
- Push Extremes: the same step of Push operation but in the Length entry the most significant bit is set to 1 to take track that the Push operation is related to the extreme zone and not to the internal zone defined by Address and Length.
- Pop and Close Transaction: mark the Index buffer with POP marker to remember that a Pop Transaction operation is in progress, in case of power-loss. If Root Transaction, calculate and store the last index used for guaranteeing the circularity in Backup Data buffer. Check if the entry to restore has been marked by a discard operation invoke: for example "Non atomic update" has happened but are not stored in Backup buffer entry. In this case, for saving "Non atomic update", a snapshot of the block is stored in the first free entry of Backup buffer. Otherwise the last consistent state of the entry is already contained in the Backup Data buffer.
- Discard the entry restored: the restoring process search entries related to the same memory region for optimizing the number of update operations. At the end of the process, BEGIN marker is invalidated, for example because the corresponding index entry is set to NOT ERASED state.
- Discard and Close Transaction: mark the index buffer with COMMIT marker to remember that a Discard Transaction operation is in course, in case of power-loss. If Root Transaction, calculate and store the last index used for guaranteeing the circularity in Backup Data buffer. Iterate the Discard operation for all the transaction. At the end of the process, BEGIN marker is invalidated, for example the corresponding index entry is set to NOT ERASED state.

Supposing that non persistent memory granularity is 4-bytes, erased element is 0x00 and consequently not erased element is 0xFF, the transaction method may provide:
- a Backup Entry size of 64 bytes, an Index, Length entry size of 1 byte and an Address entry size of 4 bytes;
- an Index Page size of 4 bytes, the minimum value for allowing a safe page erasing,
- a Length Page size of 4 bytes long to guarantee the correspondence with Index Pages;
- an Address Page size of 4*4 bytes to guarantee the correspondence with Index Pages.

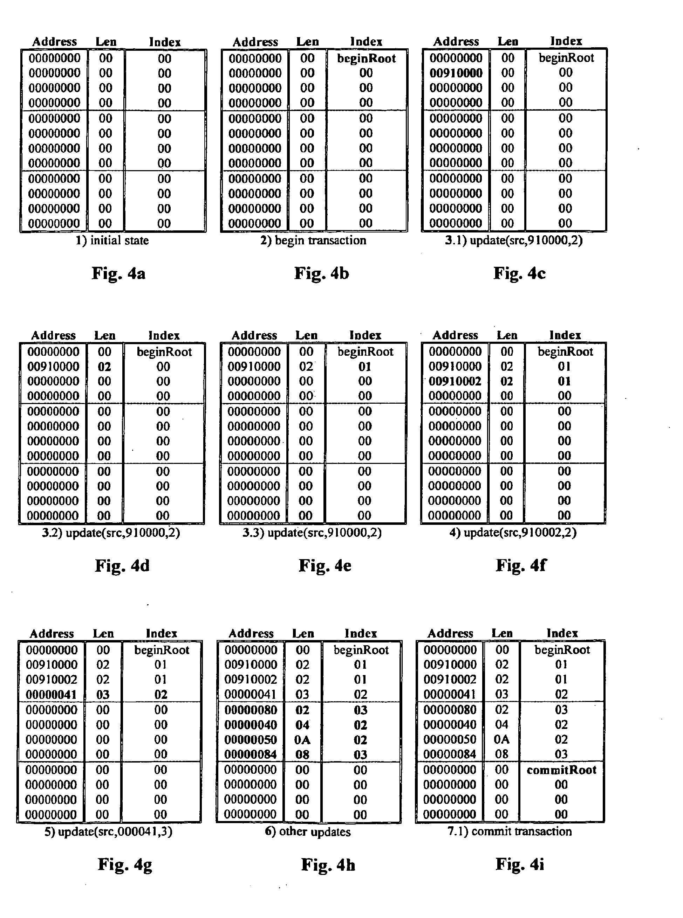

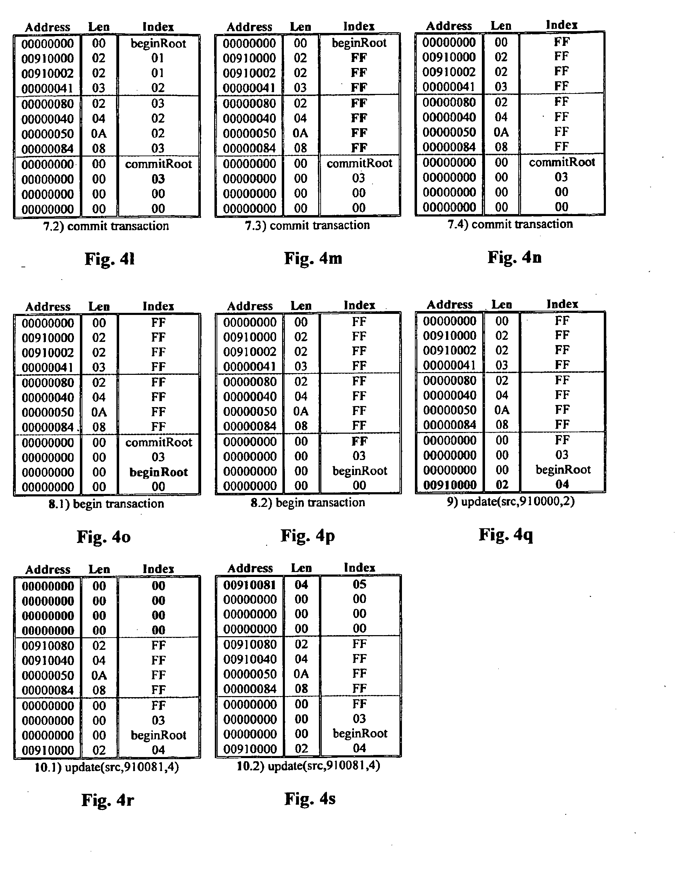

The core of the transaction method takes place in Index Buffer, that is represented with Address and Length buffers in figures 4a-4s, as an example of execution of an update operation.

More particularly, the following features of the transaction method, should be noted:
In figure 4f, since the memory region 0x910000 is already stored in the Backup Data buffer, the entry may be reused without additional erase-rewriting operations.
In figure 4g a new block is requested and so the next free entry of Backup Buffer is used. In figure 4i a marker COMMIT ROOT is written to take track that the transaction must be discarded in case of power-loss.
In figure 4l the last index used by the transaction that must be closed is searched and stored. In figure 4m some entries are discarded. In figure 4n BEGIN ROOT marker is invalidated, for example because the transaction is closed. In figure 4p COMMIT ROOT marker is invalidated (the marker BEGIN ROOT define the semantic of OLD_LAST value).
In figure 4q is indicated the next index that must be used for guaranteeing circularity in Backup Buffer is "OLD_LAST +1". Finally in figure 4r the first Index Page is not available for the writing, since its entries are discarded (i.e. set to the value NOT ERASED). So a preliminary erasing operation is necessary to free Index, Address and Length entries.

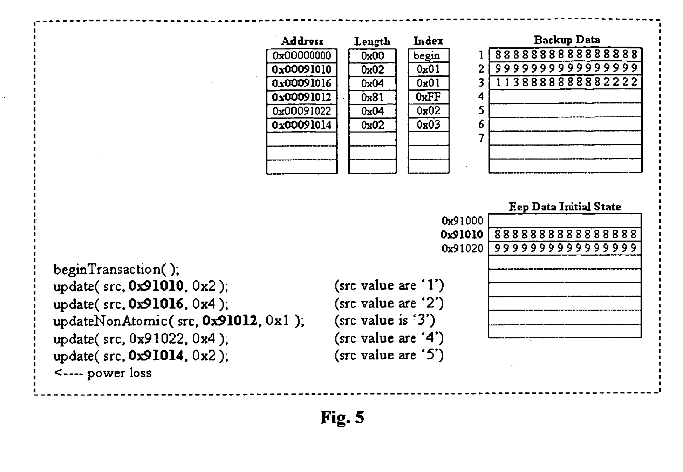

In Figure 5 are at last represented the Address, Index, Length and Backup Buffer. A sequence of update operations are requested on the non volatile memory 1, that is represented in an initial state (EEP data initial state)". During the performing of the last update listed in the sequence, a power loss occurs.

The restoring of the memory region 0x91010 according to the method of the present invention comprises the following step:
1) copy in a temporary memory vector of volatile memory RAM the last consistent state of the memory region 0x91010. Since no "Non atomic update" has happened after the last update on memory block 0x91010, its the last consistent state is contained in the Backup buffer entry 3.
   Memory Vector ← [1 1 3 8 8 8 8 8 8 8 8 8 2 2 2 2]
2) restore to the old-value the memory regions involved in the secure updates.
   Memory Vector ← [1138888888888888]
   Memory Vector ← [8838888888888888]
3) Real restoring operation in the non-volatile memory 1 of the memory region 0x91010. Note that since "Non atomic update" doesn't partecipate to the transaction, the related zone is not restored to the original value.

Advantageously, the transaction method according to the present invention optimizes the number of update operations in non volatile memory since the memory regions to be restored is first calculated in a memory vector of volatile memory and then written in non-volatile memory.

Advantageously, according to the method of the present invention, the life time of the non volatile memory is extended as long as possible because the writing operation on the transaction stack are performed only to store those sub-memory regions containing data that must be restored in case of unexpected events, while no writing operation on the transaction stack are performed to preserve data that does not require a consistent state after that unexpected events.

The transaction method further extends the life time of the transaction stack by reusing the persistent data stored inside it as long as possible, checking if persistent data, that should be stored because belonging to a memory region involved in a update operations, are already stored inside the transaction stack, thanks to a previously executed update operation.

Advantageously, according to transaction method, the life time of the non volatile memory is extended also when it must be restored after unexpected events because the consistent state of the non volatile memory are previously reconstructed inside the volatile memory RAM and then restored in non volatile memory through a single write operation.

## Claims

1. Transaction method for managing the storing of persistent data (data-R1, data-R2, data-R3, data-R4) included in at least one memory portion (R1, R2, R3, R4) of a non volatile memory (1) device inside a transaction stack (2), comprising a plurality of transaction entries (2a, 2b, 2c, 2d), during the execution of at least one update operation (op1, op2) involving at least a group of said persistent data (data-R1b, data-R2, data-R3, data-R4a), said method comprising the following steps:
- activating a transaction by means of a begin transaction marker before the execution of said at least one update operation (op1, pop2);
- executing a push instruction reading said persistent data (data-R1, data-R2, data-R3, data-R4) from said non volatile memory (1) device and storing said persistent data in said plurality of transaction entries (2a, 2b, 2c, 2d);
- executing a pop instruction, that reads said persistent data (data-R1, data-R2, data-R3, data-R4) from said plurality of transaction entries (2a, 2b, 2c, 2d) and restores them in said at least one memory portion (R1, R2, R3, R4) if an unexpected event occurs during a transaction execution and/or if a transaction programmed abort is invoked;
- executing a commit transaction instruction to indicate that said plurality of transaction entries are releasable after the execution of said at least one update operation (op1, op2);
**characterized by** also providing the functions for:
- executing a push extreme instruction reading, from said non volatile memory (1) device, data (data-R1a, data-R4b) stored in subregions (R1a, R4b) of said at least one memory portion (R1, R2, R3, R4) and storing only said data (data-R1a, data-R4b) of said sub-regions (R1a, R4b) in said plurality of transaction entries (2b, 2c) when a non atomic update involving said memory portions (R1, R2, R3, R4) is requested;
- executing a discard instruction for discarding, from said transaction stack (2), only said data (data-R1a, data-R4b) of said sub-regions (R1a, R4b).

2. Transaction method according to claim 1 **characterized in that** said data (data-R1a, data-R4b) of said sub-regions (R1a, R4b) is not updated by said at least one update operation (op1, op2).

3. Transaction method according to claim 1 **characterized in that** said push instruction stores said persistent data (data-R1, data-R2, data-R3, data-R4) in said one or more entries (2a, 2b, 2c, 2d) only if they are not already stored in said plurality of transaction entries (2a, 2b, 2c, 2d) due to a previous execution of said at least one update operation (op1, op2).

4. Transaction method according to claim 1 **characterized in that** said push extreme instruction stores said data (data-R1a, data-R4b) of said sub-regions (R1a, R4b) in said at least one of said plurality of transaction entries (2b, 2c) only if said data (data-R1a, data-R4b) of said sub-regions (R1a, R4b) is not already stored in said at least one of said plurality of transaction entries (2c, 2d) due to a previous execution of one of said at least one update operation (op1, op2).

5. Transaction method according to claim 1 **characterized in that** said discard instruction, before discarding said plurality of transaction entries (2b, 2c) that stores said data (data-R1a, data-R4b) of said sub-regions (R1a, R4b), checks if one entry of said plurality of transaction entries (2b, 2c) already stores said data (data-R1a, data-R4b) of said sub-regions (R1a, R4b) and marks said entry.

6. Transaction method according to claim 1 **characterized in that** said transaction stack (2) comprises a plurality of buffers including a plurality of corresponding entries.

7. Transaction method according to claim 6 **characterized**
**in that** said plurality of buffers comprises a Backup Data buffer, comprising a plurality of Backup Data entries, storing a plurality of values of said persistent data of said non volatile memory (1).

8. Transaction method according to claim 7, **characterized in that** Backup Data entries have a length equal to or a multiple of a granularity of said non volatile memory (1) .

9. Transaction method according to claim 6 **characterized in that** said plurality of buffers comprises an Address buffer, comprising a plurality of Address entries, storing a plurality of addresses of said persistent data in said non volatile memory (1).

10. Transaction method according to claim 6 **characterized in that** said plurality of buffers comprises a Size buffer, comprising a plurality of Size entries, storing a plurality of size of said persistent data of said non volatile memory (1).

11. Transaction method according to claim 6 **characterized in that** said plurality of buffers comprises an Index buffer, comprising a plurality of Index entries, storing a plurality of index for linking said Address and Length buffers entries to said Backup Data entries.

12. Transaction method according to claim 11 **characterized in that** said Index buffer link a Backup Data entry to one or more update operation, guaranteeing the reuse of Backup data buffer.

13. Transaction method according to claim 11 **characterized in that** said discard instruction marks said index entry as NOT ERASED.

14. Transaction method according to claim 11 **characterized in that** said index entry is written in said Index page if it is in a ready to be written state.

15. Transaction method according to claim 11 **characterized in that** said Index page is erased if said index entry is not in said ready to be written state and a writing operation is required on said index entry.

16. Transaction method according to claim 6 **characterized in that** said corresponding plurality of entries inside said plurality of buffers are written in circular way, writing in order a first entry, a plurality of following entries and restarting from said first entry when a last entry is reached.

17. Transaction method according to claim 6 **characterized in that** said one or more additional begin transaction marker is are nested inside said begin transaction marker for executing a nested plurality of said at least one update operation (op1, op2).

18. Transaction method according to claim 12 **characterized in that** inside said Index buffer is stored the last used position of said Backup buffer, for guaranteeing its circular writing.

19. Transaction method according to claim 1 **characterized in that** said persistent data (data-R1, data-R2, data-R3, data-R4) are restored from said plurality of transaction entries (2a, 2b, 2c, 2d) by
- copying in a temporary memory vector of a volatile memory RAM the last consistent state of said at least one memory portion (R1, R2, R3, R4) to restore;
- restoring to the consistent value of said at least one memory portion (R1, R2, R3, R4) involved.

## Patentansprüche

1. Transaktionsverfahren zum Verwalten der Speicherung von persistenten Daten (data-R1, data-R2, data-R3, data-R4), die in mindestens einem Speicherteil (R1, R2, R3, R4) einer nichtflüchtigen Speichervorrichtung (1) innerhalb eines Transaktionsstapels (2) enthalten sind, der eine Mehrzahl von Transaktionseinträgen (2a, 2b, 2c, 2d) aufweist, während der Ausführung von mindestens einer Aktualisierungsoperation (op1, op2), die mindestens eine Gruppe von persistenten Daten (data-R1b, data-R2, data-R3, data-R4a) betrifft, wobei das Verfahren folgende Schritte aufweist:
- Aktivieren einer Transaktion mittels einer Transaktionsbeginnmarkierung vor der Ausführung der mindestens einen Aktualisierungsoperation (op1, op2);
- Ausführen einer Push-Anweisung, die die persistenten Daten (data-R1, data-R2, data-R3, data-R4) aus der nichtflüchtigen Speichervorrichtung (1) liest und die persistenten Daten in der Mehrzahl von Transaktionseinträgen (2a, 2b, 2c, 2d) speichert;
- Ausführen einer Pop-Anweisung, die die persistenten Daten (data-R1, data-R2, data-R3, data-R4) aus der Mehrzahl von Transaktionseinträgen (2a, 2b, 2c, 2d) liest und sie in dem mindestens einen Speicherteil (R1, R2, R3, R4) wiederherstellt, wenn während einer Transaktionsausführung ein unerwartetes Ereignis auftritt und/oder wenn ein transaktionsprogrammierter Abbruch aktiviert wird;
- Ausführen einer Commit-Transaktionsanweisung, um anzuzeigen, dass die Mehrzahl von Transaktionseinträgen nach der Ausführung der mindestens einen Aktualisierungsoperation (op1, op2) freigegeben werden kann;
**dadurch gekennzeichnet, dass** es auch Funktionen vorsieht für:
- Ausführen einer Push-Extreme-Anweisung, die Daten (data-R1a, data-R4b) aus der nichtflüchtigen Speichervorrichtung (1) liest, die in Unterbereichen (R1a, R4b) des mindestens einen Speicherteils (R1, R2, R3, R4) gespeichert sind, und nur die Daten (data-R1a, data-R4b) der Unterbereiche (R1a, R4b) in der Mehrzahl von Transaktionseinträgen (2b, 2c) speichert, wenn eine nicht atomare Aktualisierung angefordert wird, die die Speicherteile (R1, R2, R3, R4) betrifft;
- Ausführen einer Verwerfungsanweisung zum Verwerfen nur der Daten (data-R1a, data-R4b) der Unterbereiche (R1a, R4b) von dem Transaktionsstapel (2).

2. Transaktionsverfahren nach Anspruch 1, **dadurch gekennzeichnet, dass** die Daten (data-R1a, data-R4b) der Unterbereiche (R1a, R4b) nicht durch die mindestens eine Aktualisierungsoperation (op1, op2) aktualisiert werden.

3. Transaktionsverfahren nach Anspruch 1, **dadurch gekennzeichnet, dass** die Push-Anweisung die persistenten Daten (data-R1, data-R2, data-R3, data-R4) in dem einen oder den mehreren Einträgen (2a, 2b, 2c, 2d) nur speichert, wenn sie nicht schon auf Grund einer vorhergehenden Ausführung der mindestens einen Aktualisierungsoperation (op1, op2) in der Mehrzahl von Transaktionseinträgen (2a, 2b, 2c, 2d) gespeichert sind.

4. Transaktionsverfahren nach Anspruch 1, **dadurch gekennzeichnet, dass** die Push-Extreme-Anweisung die Daten (data-R1a, data-R4b) der Unterbereiche (R1a, R4b) in dem mindestens einen der Mehrzahl von Transaktionseinträgen (2b, 2c) nur speichert, wenn die Daten (data-R1a, data-R4b) der Unterbereiche (R1a, R4b) nicht schon auf Grund einer vorhergehenden Ausführung der mindestens einen Aktualisierungsoperation (op1, op2) in dem mindestens einen der Mehrzahl von Transaktionseinträgen (2c, 2d) gespeichert sind.

5. Transaktionsverfahren nach Anspruch 1, **dadurch gekennzeichnet, dass** die Verwerfungsanweisung vor dem Verwerfen der Mehrzahl von Transaktionseinträgen (2b, 2c), die die Daten (data-R1a, data-R4b) der Unterbereiche (R1a, R4b) speichern, überprüft, ob ein Eintrag der Mehrzahl von Transaktionseinträgen (2b, 2c) die Daten (data-R1a, data-R4b) der Unterbereiche (R1a, R4b) schon speichert, und den Eintrag kennzeichnet.

6. Transaktionsverfahren nach Anspruch 1, **dadurch gekennzeichnet, dass** der Transaktionsstapel (2) eine Mehrzahl von Zwischenspeichern aufweist, die eine Mehrzahl von entsprechenden Einträgen aufweisen.

7. Transaktionsverfahren nach Anspruch 6, **dadurch gekennzeichnet, dass** die Mehrzahl von Zwischenspeichern einen Datensicherungszwischenspeicher aufweist, der eine Mehrzahl von Datensicherungseinträgen aufweist, die eine Mehrzahl von Werten der persistenten Daten des nichtflüchtigen Speichers (1) speichern.

8. Transaktionsverfahren nach Anspruch 7, **dadurch gekennzeichnet, dass** die Datensicherungseinträge eine Länge haben, die gleich einer oder ein Vielfaches einer Granularität des nichtflüchtigen Speichers (1) ist.

9. Transaktionsverfahren nach Anspruch 6, **dadurch gekennzeichnet, dass** die Mehrzahl von Zwischenspeichern einen Adressenzwischenspeicher aufweist, der eine Mehrzahl von Adresseinträgen aufweist, die eine Mehrzahl von Adressen der persistenten Daten in dem nichtflüchtigen Speicher (1) speichern.

10. Transaktionsverfahren nach Anspruch 6, **dadurch gekennzeichnet, dass** die Mehrzahl von Zwischenspeichern einen Größenzwischenspeicher aufweist, der eine Mehrzahl von Größeneinträgen aufweist, die eine Mehrzahl von Größen der persistenten Daten des nichtflüchtigen Speichers (1) speichern.

11. Transaktionsverfahren nach Anspruch 6, **dadurch gekennzeichnet, dass** die Mehrzahl von Zwischenspeichern einen Indexzwischenspeicher aufweist, der eine Mehrzahl von Indexeinträgen aufweist, die eine Mehrzahl von Indizes zum Verknüpfen der Adressen- und Längenzwischenspeichereinträgen mit den Datensicherungseinträgen speichern.

12. Transaktionsverfahren nach Anspruch 11, **dadurch gekennzeichnet, dass** der Indexzwischenspeicher einen Datensicherungseintrag mit einer oder mit mehreren Aktualisierungsoperationen verknüpft, wodurch die Wiederverwendung des Datensicherungszwischenspeichers garantiert wird.

13. Transaktionsverfahren nach Anspruch 11, **dadurch gekennzeichnet, dass** die Verwerfungsanweisung den Indexeintrag als NICHT GELÖSCHT kennzeichnet.

14. Transaktionsverfahren nach Anspruch 11, **dadurch gekennzeichnet, dass** der Indexeintrag in die Indexseite geschrieben wird, wenn er in einem Zustand ist, in dem er bereit ist, geschrieben zu werden.

15. Transaktionsverfahren nach Anspruch 11, **dadurch gekennzeichnet, dass** die Indexseite gelöscht wird, wenn der Indexeintrag nicht in dem Zustand ist, in dem er bereit ist, geschrieben zu werden, und eine Schreiboperation auf dem Indexeintrag erforderlich ist.

16. Transaktionsverfahren nach Anspruch 6, **dadurch gekennzeichnet, dass** die entsprechende Mehrzahl von Einträgen innerhalb der Mehrzahl von Zwischenspeichern in kreisartiger Weise geschrieben wird, wobei in der Reihenfolge eines ersten Eintrags, einer Mehrzahl von folgenden Einträgen und des Neustartens von dem erstem Eintrag, wenn ein letzter Eintrag erreicht wird, geschrieben wird.

17. Transaktionsverfahren nach Anspruch 6, **dadurch gekennzeichnet, dass** eine oder mehrere zusätzliche Transaktionsbeginnmarkierungen innerhalb der Transaktionsbeginnmarkierung verschachtelt sind, um eine verschachtelte Mehrzahl der mindestens einen Aktualisierungsoperation (op1, op2) auszuführen.

18. Transaktionsverfahren nach Anspruch 12, **dadurch gekennzeichnet, dass** innerhalb des Indexzwischenspeichers die letzte verwendete Position des Datensicherungszwischenspeichers gespeichert ist, um dessen kreisartiges Schreiben zu garantieren.

19. Transaktionsverfahren nach Anspruch 1, **dadurch gekennzeichnet, dass** die persistenten Daten (data-R1, data-R2, data-R3, data-R4) aus der Mehrzahl von Transaktionseinträgen (2a, 2b, 2c, 2d) wiederhergestellt werden durch
- Kopieren des wiederherzustellenden letzten konsistenten Zustands des mindestens einen Speicherteils (R1, R2, R3, R4) in einen temporären Speichervektor eines flüchtigen Speichers RAM;
- Wiederherstellen des mindestens einen betroffenen Speicherteils (R1, R2, R3, R4) auf den konsistenten Wert.

## Revendications

1. Procédé de transaction pour gérer la mémorisation de données persistantes (data-R1, data-R2, data-R3, data-R4) incluses dans au moins une partie de mémoire (R1, R2, R3, R4) d'un dispositif de mémoire non volatile (1) à l'intérieur d'une pile de transactions (2), comprenant une pluralité de champs de transaction (2a, 2b, 2c, 2d), pendant l'exécution d'au moins une opération de mise à jour (op1, op2) impliquant au moins un groupe des données persistantes (data-R1b, data-R2, data-R3, data-R4a), le procédé comprenant les étapes suivantes :
activer une transaction au moyen d'un marqueur de début de transaction avant l'exécution de ladite au moins une opération de mise à jour (op1, op2) ;
exécuter une instruction de poussage (Push) lisant les données persistantes (data-R1, data-R2, data-R3, data-R4) dans le dispositif de mémoire non volatile (1) et mémorisant les données persistantes dans la pluralité de champs de transaction (2a, 2b, 2c, 2d) ;
exécuter une instruction de dépilement (Pop), qui lit les données persistantes (data-R1, data-R2, data-R3, data-R4) dans la pluralité de champs de transaction (2a, 2b, 2c, 2d) et les restaure dans ladite au moins une partie de mémoire (R1, R2, R3, R4) si un évènement inattendu se produit pendant l'exécution d'une transaction et/ou si un abandon programmé de transaction est appelé ;
exécuter une instruction de remise de transaction pour indiquer que la pluralité de champs de transaction est libérable après l'exécution de ladite au moins une opération de mise à jour (op1, op2) ;
**caractérisé en ce qu'**il prévoit aussi les fonctions pour :
exécuter une instruction de poussage extrême en lisant, dans le dispositif de mémoire non volatile (1), des données (data-R1a, data-R4b) mémorisées dans des sous-régions (R1a, R4b) de ladite au moins une partie de mémoire (R1, R2, R3, R4) et mémoriser uniquement lesdites données (data-R1a, data-R4b) des sous-régions (R1a, R4b) dans la pluralité de champs de transaction (2b, 2c) lorsqu'une mise à jour non atomique impliquant lesdites parties de mémoire (R1, R2, R3, R4) est demandée ;
exécuter une instruction de suppression pour supprimer, dans la pile de transactions (2), seulement les données (data-R1a, data-R4b) des sous-régions (R1a, R4b).

2. Procédé de transaction selon la revendication 1, **caractérisé en ce que** lesdites données (data-R1a, data-R4b) des sous-régions (R1a, R4b) ne sont pas mises à jour par ladite au moins une opération de mise à jour (op1, op2).

3. Procédé de transaction selon la revendication 1, **caractérisé en ce que** l'instruction de poussage mémorise les données persistantes (data-R1, data-R2, data-R3, data-R4) dans un ou plusieurs champs (2a, 2b, 2c, 2d) seulement si elles ne sont pas déjà mémorisées dans la pluralité de champs de transaction (2a, 2b, 2c, 2d) en raison d'une exécution précédente de ladite au moins une opération de mise à jour (op1, op2) .

4. Procédé de transaction selon la revendication 1, **caractérisé en ce que** l'instruction de poussage extrême mémorise lesdites données (data-R1a, data-R4b) des sous-régions (R1a, R4b) dans ledit au moins un de la pluralité de champs de transaction (2b, 2c) seulement si lesdites données (data-R1a, data-R4b) des sous-régions (R1a, R4b) ne sont pas déjà mémorisées dans ledit au moins un de la pluralité de champs de transaction (2c, 2d) en raison d'une exécution précédente d'une desdites au moins une opération de mise à jour (op1, op2).

5. Procédé de transaction selon la revendication 1, **caractérisé en ce que** l'instruction de suppression, avant de supprimer la pluralité de champs de transaction (2b, 2c) qui mémorisent lesdites données (data-R1a, data-R4b) des sous-régions (R1a, R4b), vérifie si un champ de la pluralité de champs de transaction (2b, 2c) mémorise déjà lesdites données (data-R1a, data-R4b) des sous-régions (R1a, R4b) et marque ledit champ.

6. Procédé de transaction selon la revendication 1, **caractérisé en ce que** la pile de transactions (2) comprend une pluralité de tampons comprenant une pluralité de champs correspondants.

7. Procédé de transaction selon la revendication 6, **caractérisé en ce que** la pluralité de tampons comprend un tampon de Données de Sauvegarde, comprenant une pluralité de champs de Données de Sauvegarde, mémorisant une pluralité de valeurs des données persistantes de la mémoire non volatile (1).

8. Procédé de transaction selon la revendication 7, **caractérisé en ce que** des champs de Données de Sauvegarde ont une longueur égale à un multiple d'une granularité de la mémoire non volatile (1).

9. Procédé de transaction selon la revendication 6, **caractérisé en ce que** la pluralité de tampons comprend un tampon d'Adresses, comprenant une pluralité de champs d'Adresse, mémorisant une pluralité d'adresses des données persistantes dans la mémoire non volatile (1).

10. Procédé de transaction selon la revendication 6, **caractérisé en ce que** la pluralité de tampons comprend un tampon de Tailles, comprenant une pluralité de champs de Taille, mémorisant une pluralité de tailles des données persistantes de la mémoire non volatile (1).

11. Procédé de transaction selon la revendication 6, **caractérisé en ce que** la pluralité de tampons comprend un tampon d'Indices, comprenant une pluralité de champs d'Indice, mémorisant une pluralité d'indices pour relier les champs des tampons d'Adresses et de Longueurs aux champs de Données de Sauvegarde.

12. Procédé de transaction selon la revendication 11, **caractérisé en ce que** le tampon d'Indices relie un champ de Données de Sauvegarde à une ou plusieurs opérations de mise à jour, ce qui garantit la réutilisation du tampon de Données de Sauvegarde.

13. Procédé de transaction selon la revendication 11, **caractérisé en ce que** l'instruction de suppression marque le champ d'indice comme NON EFFACÉ.

14. Procédé de transaction selon la revendication 11, **caractérisé en ce que** le champ d'indice est écrit dans la page d'Indices si il est dans un état prêt à être écrit.

15. Procédé de transaction selon la revendication 11, **caractérisé en ce que** la page d'Indices est effacée si le champ d'indice n'est pas dans l'état prêt à être écrit et une opération d'écriture est requise sur le champ d'indice.

16. Procédé de transaction selon la revendication 6, **caractérisé en ce que** la pluralité de champs correspondants se trouvant dans la pluralité de tampons est écrite dans un mode circulaire, en écrivant dans l'ordre un premier champ, une pluralité de champs suivants et en recommençant à partir du premier champ lorsqu'un dernier champ est atteint.

17. Procédé de transaction selon la revendication 6, **caractérisé en ce que** un ou plusieurs marqueurs supplémentaires de début de transaction sont imbriqués à l'intérieur du marqueur de début de transaction pour exécuter une pluralité imbriquée desdites au moins une opération de mise à jour (op1, op2).

18. Procédé de transaction selon la revendication 12, **caractérisé en ce qu'**à l'intérieur du tampon d'Indices est mémorisée la dernière position utilisée du tampon de Sauvegarde, pour garantir son écriture circulaire.

19. Procédé de transaction selon la revendication 1, **caractérisé en ce que** les données persistantes (data-R1, data-R2, data-R3, data-R4) sont restaurées à partir de la pluralité de champs de transaction (2a, 2b, 2c, 2d) par les étapes suivantes :
copier dans un vecteur mémoire temporaire d'une RAM de mémoire volatile le dernier état cohérent de ladite au moins une partie de mémoire (R1, R2, R3, R4) à restaurer ;
restaurer la valeur cohérente de ladite au moins une partie de mémoire (R1, R2, R3, R4) impliquée.
